Europäisches Patentamt

European Patent Office

Office européen des brevets

(19)

(11) Numéro de publication: **0 191 484**
**B1**

(12) **FASCICULE DE BREVET EUROPEEN**

(45) Date de publication du fascicule du brevet:
**16.08.89**

(51) Int. Cl.⁴: **H 01 M 6/36, H 01 M 6/18**

(21) Numéro de dépôt: **86101803.4**

(22) Date de dépôt: **13.02.86**

(54) Générateur électrochimique de type primaire ou secondaire.

(30) Priorité: **15.02.85 FR 8502208**

(43) Date de publication de la demande:
**20.08.86 Bulletin 86/34**

(45) Mention de la délivrance du brevet:
**16.08.89 Bulletin 89/33**

(84) Etats contractants désignés:
**AT BE CH DE FR GB IT LI LU NL SE**

(56) Documents cités:
**EP-A- 0 123 516**
**DE-A- 2 142 922**
**FR-A- 2 244 273**
**FR-A- 2 332 687**
**FR-A- 2 442 513**

**SOLID STATE IONICS, vol. 13, no. 2, mai 1984, pages 175-179, North-Holland Publishing Co., Amsterdam, NL; C.A.C. SEQUEIRA et al.: "Stability domain of a complexed lithium salt-poly(ethylene oxide) polymer electrolyte"**

(73) Titulaire: **COMPAGNIE GENERALE D'ELECTRICITE Société anonyme dite:, 54, rue La Boétie, F-75382 Paris Cédex 08 (FR)**

(72) Inventeur: **Le Méhauté, Alain, 3 route de Belleville, F-91190 Gif sur Yvette (FR)**
Inventeur: **Crepy, Gilles, 409 Square du Dragon, F-91000 Evry (FR)**
Inventeur: **Marcellin, Georges, 1 rue Gaston Gourdon, F-91270 Vigneux sur Seine (FR)**

(74) Mandataire: **Weinmiller, Jürgen et al, Lennéstrasse 9 Postfach 24, D-8133 Feldafing (DE)**

## Description

La présente invention concerne un générateur électrochimique de type primaire ou secondaire comprenant une pluralité d'éléments constitués d'une électrode négative, d'un électrolyte, d'une électrode positive, et muni d'un moyen de chauffage de l'électrolyte.

On connaît des piles thermiques dont l'électrode négative est à base de lithium, l'électrode positive à base de chromate de calcium ou de sulfure de fer, et l'électrolyte un mélange eutectique d'un sel de lithium et d'un sel de potassium. De telles piles fonctionnent à des températures de l'ordre de 450 °C à 550 °C, pendant une durée de quelques minutes avec une puissance de l'ordre de 200 watts.

On connaît aussi par le document Solid State Ionics 13 (1984), p. 175–179, un générateur expérimental selon le préambule de la revendication 1, qui fonctionne à des températures inférieures à 140 °C. Au delà de cette température, l'électrolyte solide se déstabilise brusquement.

On connaît, en outre, par le document FR-A-2 244 273, une batterie thermique dont l'électrolyte est constitué d'un mélange eutectique LiC1/KC1 additionné de nitrite de baryum ou de chromate de lithium. Cette pile fonctionne à une température entre 500 et 600 °C.

L'invention a pour but de réaliser des piles thermiques selon le préambule de la revendication 1 susceptibles de fonctionner à des températures bien inférieures à celles nécessaires pour la batterie selon ledit document FR-A et avec des puissances très supérieures à celles selon ledit document Solid State Ionics.

Ce but est atteint par le générateur électrochimique tel que défini par la revendication 1. En ce qui concerne des exemples de mise en oeuvre préférée de ce générateur, référence est faite aux sous-revendications.

Ci-aprés l'invention sera décrite plus en détail à l'aide de modes de réalisation donnés à titre illustratif mais nullement limitatif.

Dans le dessin annexé:

– la figure 1 est une vue schématique en coupe d'une pile thermique cylindrique selon l'invention.

– la figure 2 est une vue partielle schématique en coupe d'une variante de pile selon la figure 1 à plusierus puits,

– la figure 3 est une vue en coupe selon la ligne III–III de la figure 2,

– la figure 4 est une vue schématique en coupe d'une variante de pile thermique cylindrique comportant un puits central,

– la figure 5 est une vue schématique en coupe d'une variante de pile thermique cylindrique sans puits central,

– la figure 6 est une vue schématique en coupe d'une pile thermique prismatique selon l'invention

– la figure 7 illustre l'amorçage d'une pile selon l'invention.

De toutes les figures, des éléments analogues sont référencés par les mêmes nombres.

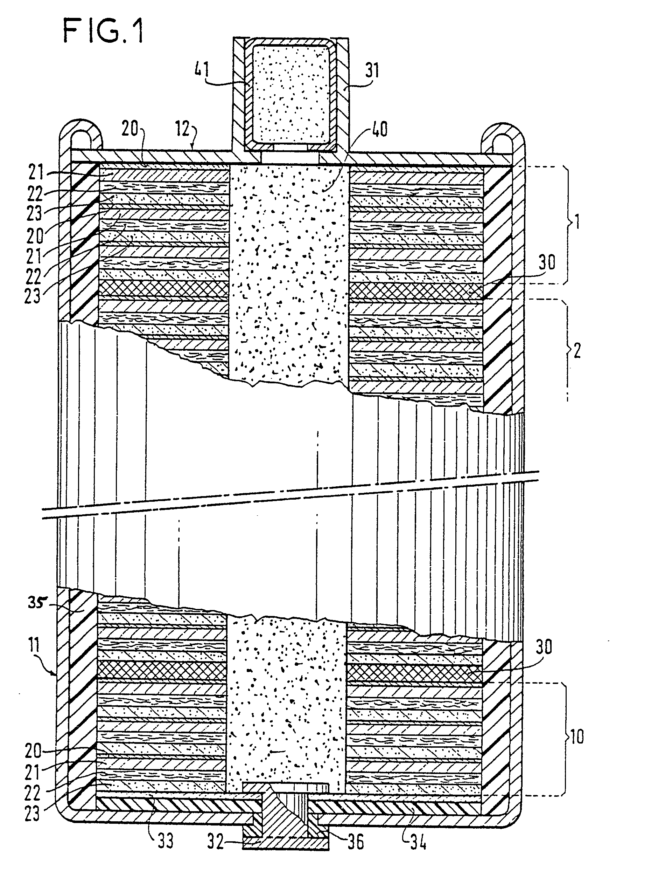

On voit dans la figure 1 une pile enfermée dans un boîtier métallique cylindrique constitué d'un godet 11 fermé par un couvercle 12. Elle comprend trois cents éléments électrochimiques superposés regroupés en dix blocs que l'on a référencés 1, 2,··· 10.

Pour ne pas surcharger la figure on n'a illustré que trois éléments par bloc et non trente; par ailleurs les échelles ne sont pas respectées.

Dans chaque élément on trouve une feuille de lithium 21 associée à une feuille de cuivre ou de nickel 20.

La couche 22 est un électrolyte polymère solide formé d'un complexe de polyoxyéthylène avec un sel de lithium $LiCF_3SO_3$.

La couche 23 est une électrode composite contenant 7% en poids de bioxyde de manganèse $MnO_2$, 10% de noir de carbone et de l'électrolyte solide.

Entre deux blocs consécutifs est prévue une entretoise métallique 30 assurant le contact électrique entre ces blocs.

On a référencé 31 et 32 les bornes positive et négative du générateur, 33 une plaque métallique assurant le contact électrique, 34, 35, 36 des pièces isolantes.

L'ensemble de l'empilement présente un puits central contenant une composition pyrotechnique 40. La mise à feu est assurée par une amorce 41 connue en elle-même. La conduction thermique est réalisée par l'intermédiaire des feuilles métalliques 20 et les entretoises 30.

Exemple de caractéristiques dimensionnelles:
– épaisseur de la feuille de lithium 21: 1/10 mm
– épaisseur de la feuille de cuivre 20: inférieure à 2/10 mm
– épaisseur de la couche d'électrolyte 22: de l'ordre de 1/10 mm
– épaisseur de la couche 23: de l'ordre de 2/10 mm
– hauteur totale d'un élément: de l'ordre de 0,6 mm
– hauteur d'un bloc 1 de 30 éléments: de l'ordre de 1,8 cm
– diamètre d'un élément: 13 cm
– épaisseur d'une entretoise 30: 2 mm
– hauteur totale des éléments dans leur boîtier: 20 cm
– diamètre du puits central: 3,5 cm

Pour une température de fonctionnement de 150 °C on a un générateur présentant les caractéristiques suivantes:
– 10 blocs de 90 volts en série (900 volts)
– densité de courant: 10 mA/cm$^2$
– courant disponible: 1,11 A
– énergie volumique: 312 wh/cm$^3$
– puissance: 1000 watts
– énergie: 1000 wh

Selon une autre variante on réalise un générateur primaire cylindrique 84 W/84 Wh/30 volts avec 3 blocs de 10 éléments en parallèle; les éléments sont analogues aux éléments de l'exemple précédent.

Pour la mise en parallèle, on remplace les entretoises métalliques 30 par des séparateurs isolants, et l'on prévoit des connexions métalliques supplémentaires entre les blocs.

Les caractéristiques dimensionnelles sont:
- hauteur totale d'un bloc de 10 éléments: 0,6 cm
- hauteur totale d'un bloc de 10 éléments: 0,6 cm
- épaisseur de l'entretoise entre deux blocs: 1 mm
- surface d'un élément: 94 cm²
- diamètre du puits central: 1 cm
- hauteur totale des éléments actifs: 2,1 cm
- volume: de l'ordre de 200 cm³

Pour une température de fonctionnement de 150 °C on a les caractéristiques suivantes:
- tension: 30 volts
- courant disponible: 2,8 A
- énergie volumique: 420 wh/dm³
- capacité du générateur: 3 Ah

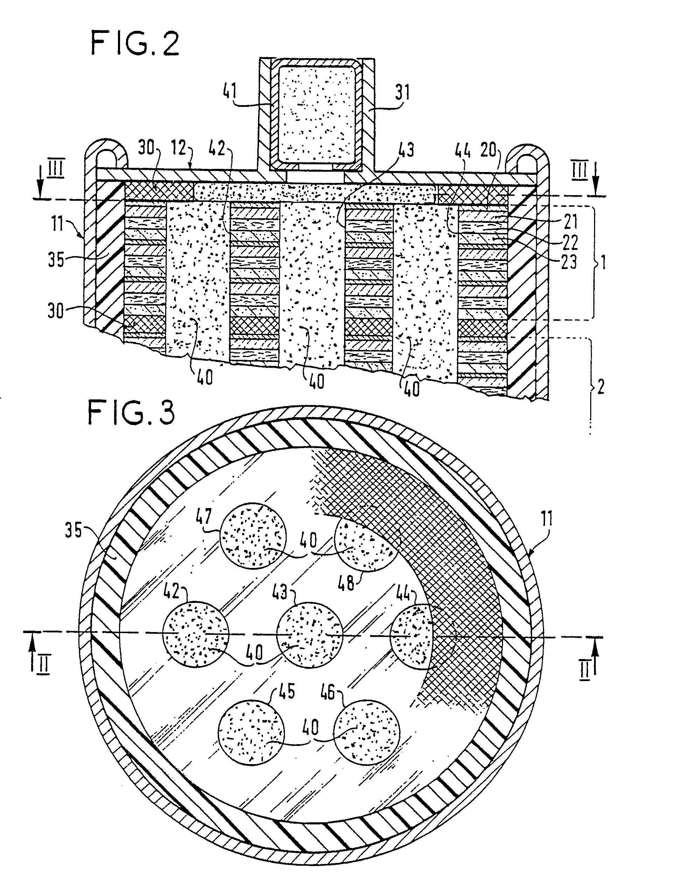

Les figures 2 et 3 montrent une variante de réalisation dans laquelle la composition pyrotechnique 40 est répartie dans plusieurs puits référencés 42 à 47.

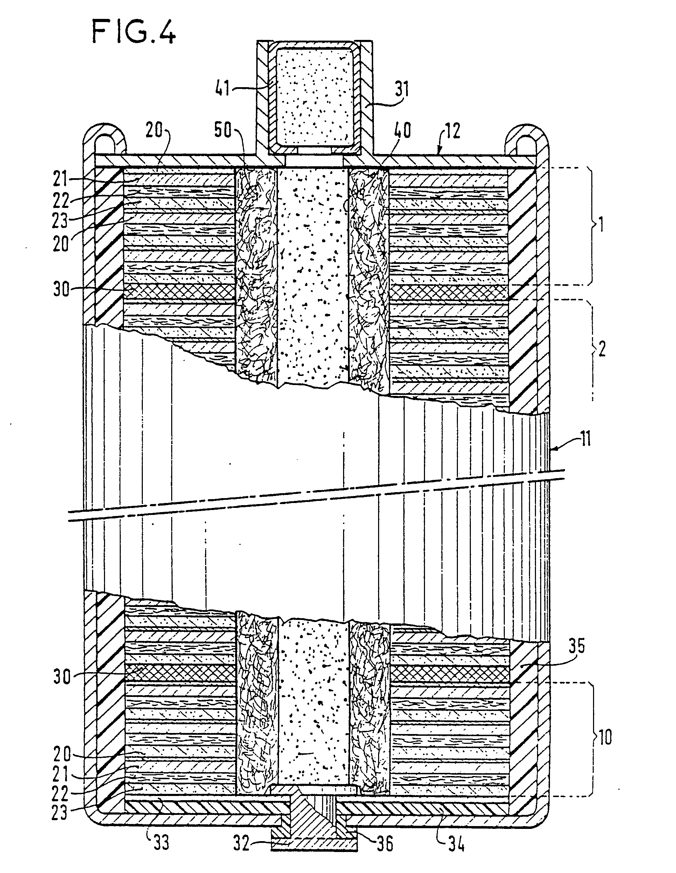

Dans la figure 4 le puits central contenant la composition pyrotechnique 40 est entouré d'une couche 50 d'huile aliphatique ou siliconée qui transmet la chaleur aux éléments électrochimiques, ou d'un tampon thermique qui fixe la température. L'huile imbibe un corps poreux qui lui sert de support, tel qu'un feutre de laine de verre.

Selon une variante non illustrée les entretoises métalliques 30 peuvent être remplacées par des couches isolantes imbibées d'huile or du tampon, qui favorisent les échanges de chaleur. Des connexions électriques supplémentaires doivent alors être prévues entre les blocs.

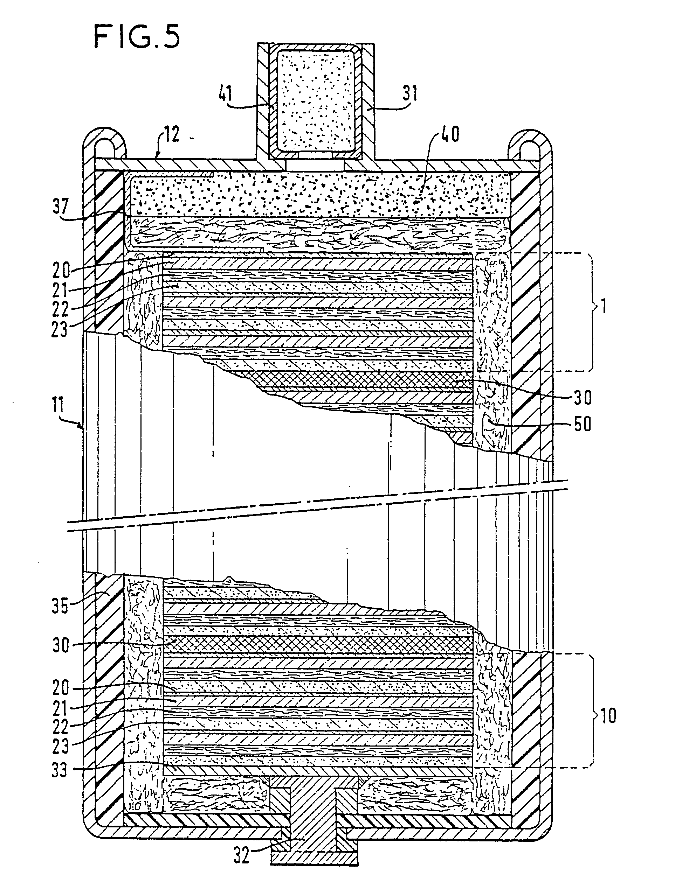

Dans la figure 5 la pile n'a plus de puits central. L'ensemble de l'empilement des éléments est entouré d'huile 50 ou du tampon thermique chauffé par la composition pyrotechnique 40 située à la partie supérieure de la pile. On a référencé 37 une connexion électrique supplémentaire pour relier l'empilement au couvercle 12.

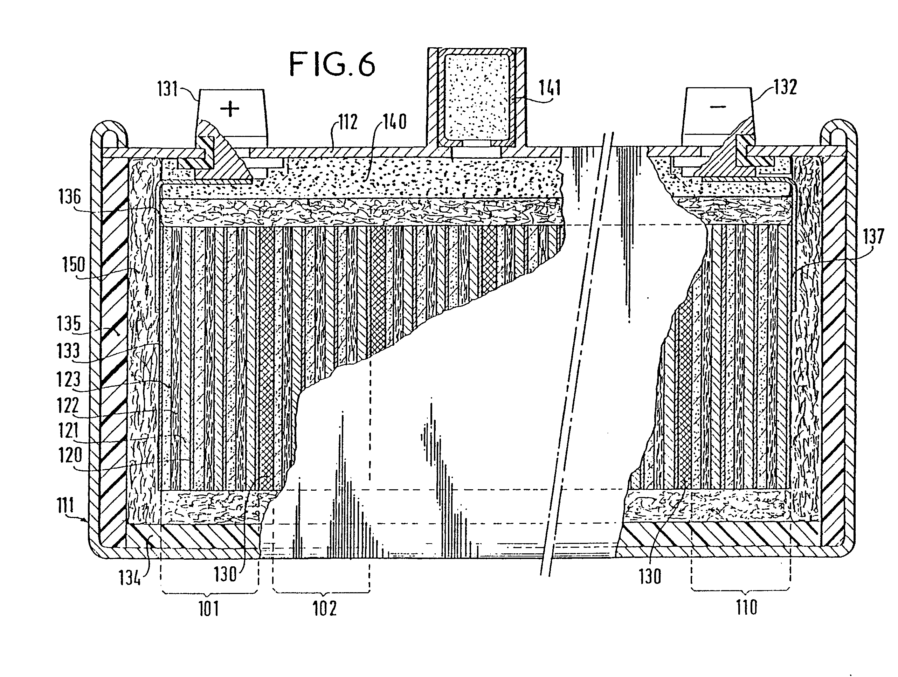

On a montré dansla figure 6 un générateur prismatique selon l'invention logé dans un bac 111 fermé par un couvercle 112. Chaque élément comporte les mêmes couches de base que les éléments des féngérateurs précédents
- feuille de nickel ou de cuivre: 120
- couche de lithium: 121
- couche d'électrolyte: 122
- électrode positive: 123

Les éléments sont regroupés en blocs 101 à 110 séparés par des entretoises 130; on a indiqué par 136 et 137 des connexions terminales aux bornes positive 131 et négative 132. Le mélange pyrotechnique est référencé 140, la couche d'huile ou le tampon qui entoure tout l'empilement est indiquée 150 et l'amorce 141. Les couches isolantes sont notées 134, 135.

Exemples de caractéristiques dimensionnelles:
- 1 bloc comporte 10 éléments électrochimeiques
- hauteur d'un bloc: 8 cm
- largeur d'un bloc: 4,3 cm
- épaisseur d'un bloc: 5 mm
- épaisseur d'une entretoise 130: 1 mm
- surface d'un élément: 34,5 cm².

Selon un premier mode de réalisation, on met en oeuvre trois blocs de 30 volts connectés en parallèle (les entretoises 130 sont donc des couches isolantes poreuses susceptibles de contenir de l'huile ou le tampon thermique).

Pour un fonctionnement à une température de 150 °C on obtient les caractéristiques électriques suivantes:
- courant disponible: 1 A
- capacité disponible: 1 Ah
- puissance: 30 W
- énergie: 30 Wh
- énergie volumique: 472 Wh/dm³.

On choisit le nombre de blocs et les dimensions des éléments en fonction des caractéristiques électriques recherchées.

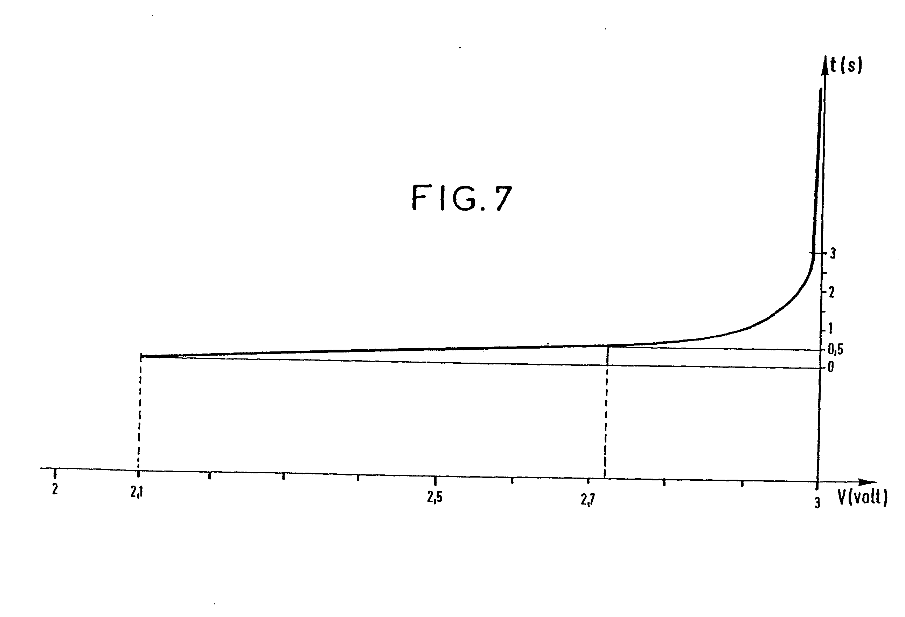

On a montré dans la figure 7 comment se réalisait l'amorçage d'une pile selon l'invention. Pour cela on effectue l'opération suivante: On monte dans un boîtier présentant un diamètre de 2 centimètres et une hauteur de 2 millimètres un couple électrochimique analogue à ceux qui apparaissent dans la figure 1. Cette pile est mise à 25 °C sous un courant de 10µ A. La tension de base de cette pile est 2,1 volts. Au temps t=0, la pile est transférée de la température ambiante à la température 150 °C. La dépolarisation a lieu en moins de 3 secondes comme le montre la courbe V (volts) en fonction du temps t (secondes). La pile présente une tension égale à 80% de sa tension stationnaire après cinq dixièmes de seconde.

Bien entendu l'invention n'est pas limitée aux modes de réalisation décrits et représentés.

On a décrit en détail des piles thermiques dont l'électrolyte était constitué d'un complexe de polyoxyéthylène avec LiCF₃SO₃; mais d'autres sels peuvent être utilisés, par exemple LiC10₄, LiAsF₆, Li₂B₁₂H₁₂, Li₂B₁₀H₁₀·.

L'électrode de lithium peut être remplacée par une électrode en magnésium ou en alliage de lithium ou de magnésium.

Par ailleurs, lorsque la matière active positive est par exemple un composé du type TiS₂, NiP-S₃···etc, le générateur peut être récupéré et rechargé.

L'invention s'applique donc également aux générateurs secondaires.

**Revendications**

1. Générateur électrochimique de type primaire ou secondaire comprenant une pluralité d'éléments constitués d'une électrode négative dont la matière active est choisie parmi le lithium, le magnésium et leurs alliages, d'un électrolyte à base de polymère solide choisi parmi le polyoxyéthylène, le polypropylène et leurs dérivés, formant un complexe avec un sel alcalin, et d'une électrode positive, dont la matière active est choisie parmi les oxydes tels que $MnO_2$, $CrO_2$, les sulfures tels que $FeS_2$, $TiS_2$, $MoS_3$, le soufre, les polysulfures et leurs dérivés, et muni d'un moyen de chauffage de l'électrolyte, caractérisé par le fait que ledit moyen de chauffage comprenant une composition pyrotechnique associée à une amorce est susceptible de porter ledit électrolyte à une température comprise entre 150 °C et 170 °C lorsque ladite électrode négative est en lithium et comprise entre 150 °C et 250 °C lorsque ladite électrode négative est en magnésium, ledit moyen de chauffage étant associé à un tampon thermique choisi parmi une huile aliphatique ou siliconée, un sel fusible, un polymère fusible à la température à laquelle on désire que le générateur fonctionne.

2. Générateur électrochimique selon la revendication 1, caractérisé par le fait que ladite électrode positive est une électrode composite constituée par un mélange de ladite matière active positive dans une proportion supérieure à 50% en poids, d'électrolyte et d'un conducteur électronique.

3. Générateur électrochimique selon l'une des revendications 1 à 2, caractérisé par le fait que ladite électrode négative comporte une feuille en un métal choisi parmi le cuivre et le nickel.

4. Générateur électrochimique selon l'une des revendications précédentes, caractérisé par le fait qu'il est cylindrique et comporte au moins un puits cylindrique contenant une composition pyrotechnique coopérant avec une amorce et ledit tampon thermique.

5. Générateur électrochimique selon la revendication 4, caractérisé par le fait que ladite composition pyrotechnique est entourée d'une couche dudit tampon thermique.

6. Générateur électrochimique selon la revendication 4, caractérisé par le fait que l'ensemble desdits éléments est entouré sur toutes ses faces d'une couche dudit tampon thermique.

7. Générateur électrochimique selon l'une des revendications 1 à 3, caractérisé par le fait que ledit générateur est prismatique et que l'ensemble de ses éléments est entouré sur toutes ses faces d'une couche dudit tampon thermique.

8. Générateur électrochimique selon l'une des revendications précédentes, caractérisé par le fait qu'il est rechargeable.

**Patentansprüche**

1. Elektrochemischer Generator vom Primär- oder Sekundärtyp mit einer Vielzahl von Elementen, bestehend aus einer negativen Elektrode, deren negatives aktives Material aus den Elementen Lithium, Magnesium und ihren Legierungen ausgewählt ist, aus einem Elektrolyten auf Festpolymerbasis, der aus den Stoffen Polyoxyäthylen, Polypropylen und ihren Derivaten ausgewählt ist, die einen Komplex mit einem alkalischen Salz bilden, aus einer positiven Elektrode, deren aktives Material aus den Oxiden wie $MnO_2$, $CrO_2$, den Sulfiden wie $FeS_2$, $TiS_2$, $MoS_3$, Schwefel, den Polysulfiden und ihren Derivaten ausgewählt ist, und aus einem Mittel zum Aufheizen des Elektrolyten, dadurch gekennzeichnet, dass das eine pyrotechnische Zusammensetzung enthaltende und mit einem Zünder verbundene Aufheizmittel in der Lage ist, den Elektrolyten auf eine Temperatur zwischen 150 °C und 170 °C zu bringen, wenn die negative Elektrode aus Lithium besteht, und zwischen 150 °C und 250 °C, wenn die negative Elektrode aus Magnesium besteht, wobei das Aufheizmittel mit einem thermischen Pfropfen versehen ist, der aus einem aliphatischen oder silikonhaltigen Öl, einem schmelzbaren Salz oder einem bei einer Temperatur schmelzbaren Polymer ausgewählt ist, bei der der Generator arbeiten soll.

2. Elektrochemischer Generator nach Anspruch 1, dadurch gekennzeichnet, dass die positive Elektrode eine zusammengesetzte Elektrode ist, bestehend aus einer Mischung der positiven aktiven Substanz, mit einem über 50% des Gewichts des Elektrolyten liegenden Anteil, und einem elektronischen Leiter.

3. Elektrochemischer Generator nach einem der Ansprüche 1 bis 2, dadurch gekennzeichnet, dass die negative Elektrode eine Folie aus Kupfer oder Nickel aufweist.

4. Elektrochemischer Generator nach einem der vorhergehenden Ansprüche, dadurch gekennzeichnet, dass er zylindrisch ist und mindestens einen zylindrischen Schacht besitzt, der eine pyrotechnische Zusammensetzung enthält, die mit einem Zünder und dem thermischen Pfropfen zusammenwirkt.

5. Elektrochemischer Generator nach Anspruch 4, dadurch gekennzeichnet, dass die pyrotechnische Zusammensetzung von einer Schicht des thermischen Pfropfens umgeben ist.

6. Elektrochemischer Generator nach Anspruch 4, dadurch gekennzeichnet, dass die Gesamtheit der Elemente an allen ihren Flächen mit einer Lage des thermischen Pfropfens umgeben ist.

7. Elektrochemischer Generator nach einem der Ansprüche 1 bis 3, dadurch gekennzeichnet, dass der Generator prismatisch ist und die Gesamtheit seiner Elemente an allen ihren Flächen mit einer Lage des thermischen Pfropfens umgeben ist.

8. Elektrochemischer Generator nach einem der vorhergehenden Ansprüche, dadurch gekennzeichnet, dass er wiederaufladbar ist.

**Claims**

1. An electrochemical battery of the primary type or of the secondary type, comprising a plurality of cells each constituted by a negative electrode whose active material is selected from lithium, magnesium, and alloys thereof, an electrolyte based on a solid polymer selected from polyoxyethylene, polypropylene, and derivatives thereof, and forming a complex with an alkali salt, and a positive electrode whose active material is selected from oxides such as $MnO_2$, $CrO_2$, sulfides such as $FeS_2$, $TiS_2$, $MoS_3$, sulfur, and polysulfides and derivatives thereof, and provided with heating means for heating the electrolyte, the battery being characterized by the fact that said heating means, comprising a pyrotechnical composition associated with a fuse, is suitable for raising said electrolyte to a temperature lying between 150 °C and 170 °C when said negative electrode is made of lithium, and lying between 150 °C and 250 °C when said negative electrode is made of magnesium, said heating means being associated with a thermal buffer selected from an aliphatic oil, a silicone oil, a fusible salt, and a polymer which melts at the desired battery operating temperature.

2. An electrochemical battery according to claim 1, characterized by the fact that said positive electrode is a composite electrode constituted by a mixture of said positive active material constituting more than 50% by weight thereof, together with electrolyte and an electronic conductor.

3. An electrochemical battery according to claim 1 or 2, characterized by the fact that said negative electrode comprises a sheet of a metal selected from copper and nickel.

4. An electrochemical battery according to any preceding claim, characterized by the fact that it is cylindrical and includes at least one cylindrical well containing a pyrotechnical composition cooperating with a fuse and with said thermal buffer.

5. An electrochemical battery according to claim 4, characterized by the fact that said pyrotechnical composition is surrounded by a layer of said thermal buffer.

6. An electrochemical battery according to claim 4, characterized by the fact that the assembly of said cells is surrounded on all its faces with a layer of said thermal buffer.

7. An electrochemical battery according to any one of claims 1 to 3, characterized by the fact that said battery is prismatic and the assembly of its cells is surrounded on all its faces by a layer of said thermal buffer.

8. An electrochemical battery according to any preceding claim, characterized by the fact that it is rechargeable.

1/6

FIG.1

**FIG.2**

**FIG.3**

3/6

FIG.4

FIG.5

FIG.6

FIG.7